# EUROPEAN PATENT APPLICATION

(11) **EP 4 817 412 A1**
(43) Date of publication of application: **07.10.2026**
(21) Application number: 26170678.2
(22) Date of filing: 02.04.2026
(51) Int. Cl.: A01K 31/17

(54) **POULTRY FARMING SYSTEM, PARTICULARLY FOR EGG-LAYING HEN FARMS**

(30) Priority: 04.04.2025 IT 202500007224
(71) Applicant: Officine Facco & C. S.p.A., 35010 Campo San Martino (IT)
(72) Inventor: FINCO, Massimo, 35122 PADOVA (IT); FINCO, Luca, CHICAGO, 60611 (US)
(74) Representative: Modiano, Micaela Nadia

(57) **Abstract**

A poultry farming system (1, 101), particularly for egg-laying hen farms, which comprises a supporting frame (2, 102) that defines three levels: a lower level (3c, 103c), an intermediate level (3b, 103b) and an upper level (3a, 103a);
at least one nest (4, 104) is accommodated on a nest level (3d, 103d) chosen from the upper level (3a, 103a) and the intermediate level (3b, 103b); at least one access area (7, 107) is at least partially arranged on the nest level (3d, 103d);
a collection device (9, 109) being provided, which comprises an egg collection belt (9a, 109a);
at least one droppings belt (10, 110) being located downwardly in the nest level (3d, 103d).

## Description

The present invention relates to a poultry farming system, particularly for egg-laying hen farms.

In recent years, for reasons of ethics, poultry farming systems are becoming increasingly widespread in which consideration is given first and foremost to the welfare of the animal.

We are thus shifting from battery farming systems to alternative farming systems, i.e. systems wherein the animal has considerable freedom of movement both on the horizontal plane and on the vertical plane by means of perches and superimposed walkable levels.

Alternative farming systems are governed by European and Italian regulations, all of which set out a series of parameters and characteristics that must be met in order to ensure proper welfare for the animals.

As things currently stand, in Italy the principal legislation governing this area is Legislative Decree no. 267 of 29 July 2003, and in particular, for alternative systems, its Enclosure B.

The regulations set down, for example, the maximum allowable number of animals per square meter of usable surface of the system.

To define the maximum number of animals that can be contained in a farm, it is therefore necessary to calculate the total usable surface of that system.

The regulations therefore set down what the characteristics are which define a usable surface for the purposes of the above-mentioned count.

For example, among the various prescriptions, a system of the alternative type can extend to at most four levels which are superimposed at a distance of not less than 45 centimeters.

Each one of these levels, in order to be counted as usable surface, must be for example made in such a manner as to prevent the feces from falling onto the lower levels.

In the description that follows, the expression "usable surface" means a surface that fully meets the prescriptions of the regulations cited above, and which can therefore be counted in order to define the maximum number of animals that can be accommodated in a farm.

So to maximize the yield of the farm, the need is evident to maximize the usable surface for the same ground footprint of the system.

In order to accommodate the animals in accordance with the regulations, the various levels usually have halt areas.

Such halt areas are generally made up of grids, usually metallic and open on their bottom in order to prevent dirt from accumulating on them.

In more detail, the halt areas are fixed to the main frame of the system in a substantially horizontal position or at most with an inclination of a few degrees toward the center of the system in a substantial V-shape.

At these halt areas, means for watering and feeding the animals can generally be located.

In order to protect the lower levels, usually below each level that has halt areas a sliding droppings belt is positioned, for the purpose of collecting the feces and dirt that are created on that level and which pass through the grids, and conveying it out of the system in order to improve hygiene and the health of the animals.

Another point defined in the regulations concerns the need to give the animals a proper environment for laying eggs, also termed a "nest".

The area of the nest must be protected and separated from the rest of the environment.

The model of nest that is best-performing from the point of view of the end quality of the eggs and of the welfare of the animals is known as the "collective nest system", an environment delimited by three closed walls, which is connected to the outside through one or more openings fitted with curtains which allow access by the animals.

This nest is generally provided with a bottom that is inclined toward the egg collection device, which generally comprises an egg collection belt.

The bottom can furthermore be movable, so as to facilitate the evacuation of the animals once the egg-laying period has ended.

In systems with several levels, the nests can be placed on one or more of these levels.

In order to allow easy access to the nest, access areas are positioned in front of each opening to the nest, and are usually composed of grids, similarly to the halt areas.

These access areas, differently from the halt areas, should be used by the animals mainly when going to and from the nest.

The access areas, which are present on each level that contains at least one nest, are substantially made up of the grid alone which, being open downward, does not prevent feces and dirt from falling onto the levels underneath.

Because of this, these access areas cannot be counted as usable surfaces.

This drawback entails a considerable decrease in the number of animals that can be farmed in a conventional system, since each level that is provided with a nest does not count toward the calculation of usable surfaces.

The aim of the present invention is to provide a poultry farming system of the alternative type that is capable of improving the known art in one or more of the above-mentioned aspects.

Within this aim, an object of the invention is to provide a poultry farming system that is capable of increasing the usable surface of a farming system for the same volumetric footprint with respect to a similar, conventional poultry farming system.

Another object of the invention is to provide a poultry farming system that improves the welfare of the animals.

A further object of the invention is to provide a poultry farming system that is easy to clean.

A further object of the present invention is to overcome the drawbacks of the background art in a manner that is alternative to any existing solutions.

Another object of the invention is to provide a poultry farming system plant that is highly reliable, easy to implement, and at low cost.

This aim and these and other objects which will become more apparent hereinafter are achieved by a poultry farming system according to claim 1, optionally provided with one or more of the characteristics of the dependent claims.

Further characteristics and advantages of the invention will become more apparent from the detailed description of a preferred, but not exclusive, embodiment of the poultry farming system according to the invention, which is illustrated for the purposes of non-limiting example in the accompanying drawings wherein:
- Figure 1 is a schematic front elevation view of an embodiment of the system according to the invention;
- Figure 2 is a detailed view of the system shown in Figure 1;
- Figure 3 is a schematic front elevation view of an additional embodiment of the system according to the invention.

With reference to the figures, the poultry farming system, generally designated by the reference numeral 1, 101, comprises a supporting frame 2, 102.

This supporting frame 2, 102 defines three levels: a lower level 3c, 103c, positioned proximate to the ground, an intermediate level 3b, 103b, contiguous with and substantially superimposed on the lower level 3c, 103c, and an upper level 3a, 103a, contiguous with and substantially superimposed on the intermediate level 3b, 103b.

More specifically, in this description the term "levels" means volumes, substantially prismatic and with a quadrangular base, for the most part open, delimited vertically by the outer posts 2a, 102a of the supporting frame 2, 102 and horizontally by the cross-members 2b, 102b of the frame, which, taken together, make up the planes 2c, 102c.

"Quadrangular" means a flat shape delimited by four sides, such as for example a square, a rectangle, a trapezoid, a rhombus, or the like.

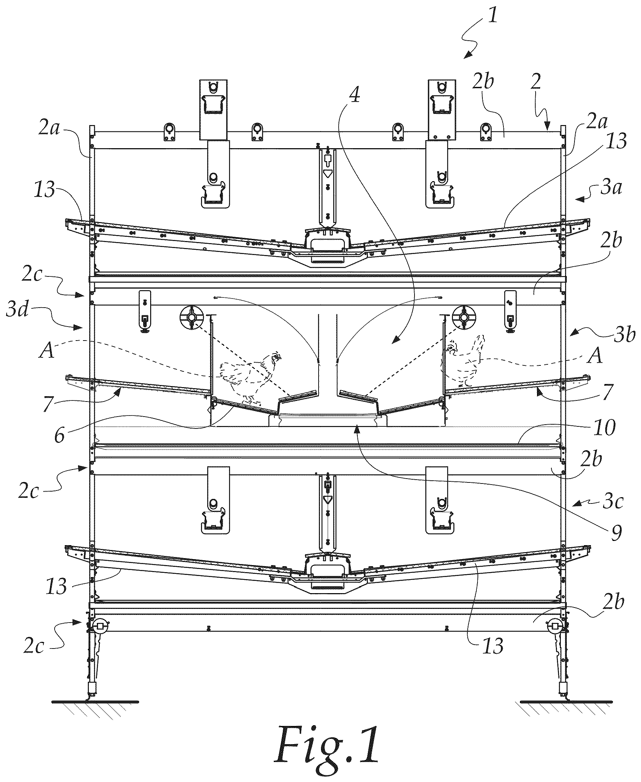

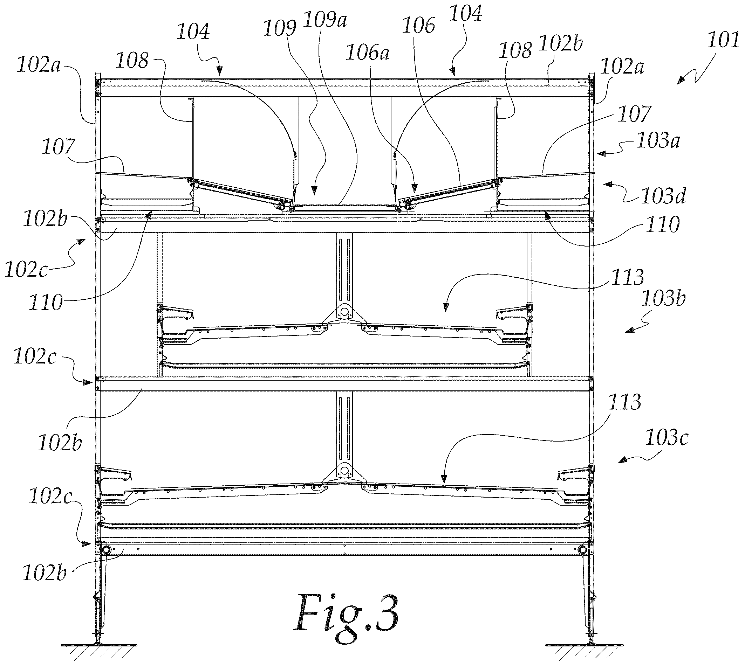

Furthermore, the terms "horizontal", "vertical", "upper", "lower" and other indications of relative positions between components used in this description are always used with reference to the system 1 in its status of use, shown in Figure 1, and the system 101 in its status of use, shown in Figure 3.

Moreover, the system 1, 101 comprises at least one nest 4, 104, which is accommodated on a nest level 3d, 103d chosen from the upper level 3a, 103a and the intermediate level 3b, 103b.

With particular reference to Figure 1, the nests 4 are positioned on the intermediate level 3b.

With particular reference to Figure 3, the nests 104 are positioned on the upper level 103a.

In this description, the term "nest level" 3d, 103d will mean, from this point onward, unless defined differently, the level containing the nest, independently of whether this level is the upper level 3a, 103a or the intermediate level 3b, 103b.

There is also at least one access area 7, 107, which is at least partially arranged on the nest level 3d, 103d.

This access area 7, 107 extends from an external wall 8, 108 of each nest 4, 104 in the opposite direction with respect to that of the nest 4, 104 itself.

Particularly, the term "external wall" 8, 108 in this text means the wall of the nest 4, 104, usually vertical, that is provided with one or more openings for the ingress and egress of the animals A into and out of the nest 4, 104.

In more detail, an access area 7, 107 is a surface adapted to support the animals A and which generally comprises a grid or a netting.

Conveniently, there is at least one collection device 9, 109 which comprises an egg collection belt 9a, 109a for conveying the eggs B.

This collection device 9, 109 is associated with the nest level 3d, 103d proximate to a first portion 6a, 106a of the bottom 6, 106 of the nest 4, 104.

This first portion 6a, 106a is distal with respect to the external wall 8, 108.

In more detail, each nest 4, 104 is made in such a way as to convey the eggs B laid in it toward the egg collection belt 9a, 109a of the collection device 9, 109, usually by virtue of an inclination of the bottom 6, 106 in the direction of the egg collection belt 9a, 109a.

More specifically, each egg collection belt 9a, 109a slides in the nest level 3d, 103d, winding around two first rollers, not shown in the figures.

These first rollers are generally arranged proximate to the front ends of the nest level 3d, 103d, and they move the egg collection belt 9a, 109a.

The term "front ends" refers to the vertical sides of the system which are opposite each other and perpendicular to the external walls 8, 108.

One of the particularities of the system 1, 101 according to the invention consists in that it comprises at least one droppings belt 10, 110 located in a lower portion of the nest level 3d, 103d.

Also according to the invention, the droppings belt 10, 110 is at least interposed between the at least one access area 7, 107 present on the nest level 3d, 103d and the level immediately below it.

In this manner, the dirt and the feces produced by the animals on the nest level 3d, 103d, after passing through the access areas 7, 107, are deposited on the droppings belt 10, 110 instead of onto the level below.

By using this droppings belt 10, 110, the surfaces of the access areas 7, 107, which are comprised in the nest level 3d, 103d, can therefore legally be counted as usable surfaces.

Advantageously, the droppings belt 10, 110 has an extension in plan view that substantially coincides with the extension in plan view of the surfaces of the at least one access area 7, 107 comprised within the nest level 3d, 103d.

In other words, the droppings belt 10, 110 extends, generally for the entire extension in plan view of the system 1, 101, in such a manner that each of the at least one access area 7, 107 of the system, in its portion delimited by the supporting frame 2, 102, entirely surmounts a part of the droppings belt 10, 110.

In this manner the droppings belt 10, 110 protects at least some surfaces of the level underlying the nest level 3d, 103d from the feces and dirt produced by the animals A that pass over the overlying access areas 7, 107.

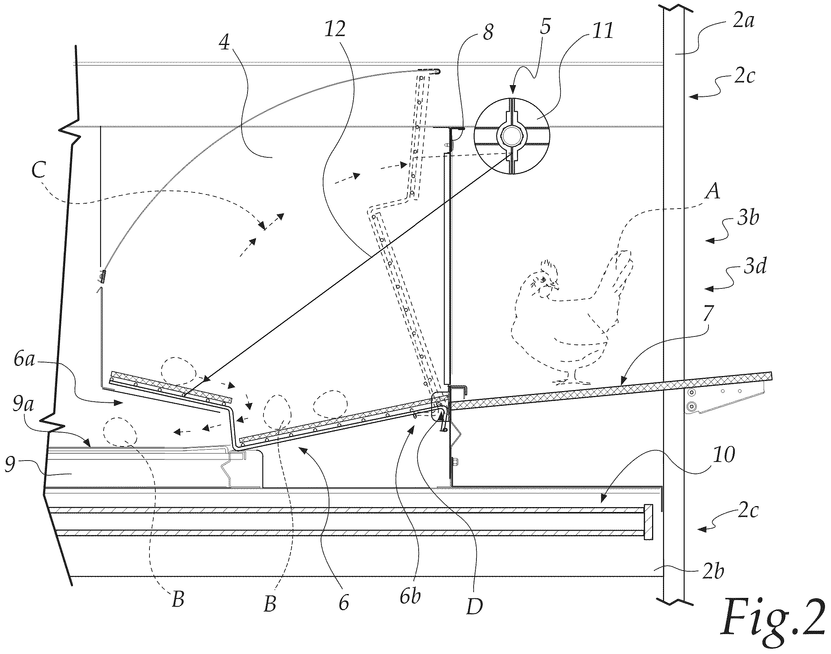

Optionally, with particular reference to Figures 1 and 2, the droppings belt 10 can extend substantially for the entire extension of the nest level 3d.

In this manner the droppings belt 10 protects substantially all of the surfaces of the level underlying the nest level 3d.

Conveniently, the droppings belt 10, 110 is made of polymeric material such as, for example, polypropylene.

Moreover, the droppings belt 10, 110 can slide along the nest level 3d, 103d.

More specifically, each droppings belt 10, 110 slides in the lower portion of the nest level 3d, 103d, being wound around two second rollers, not shown in the figures.

In the embodiments shown in the figures, these second rollers are arranged proximate to the front ends of the nest level 3d, 103d, and they move the droppings belt 10, 110.

In a further possible embodiment, not shown in the figures, these second rollers are arranged proximate to the outer posts of the nest level and they move the droppings belt at right angles to the direction of movement of the egg collection belt.

With particular reference to Figure 1, the nest level 3d coincides with the intermediate level 3b.

The upper level 3a and the lower level 3c comprise mainly halt areas 13.

In the embodiment shown in Figure 1, there is a single droppings belt 10, and it extends substantially for the entire extension of the nest level 3d.

Moreover, the droppings belt 10 is positioned in the lower portion of the nest level 3d.

Conveniently, the droppings belt 10 prevents the feces and dirt from falling onto the halt areas 13 of the lower level 3c.

In this manner the access areas 7 can be considered usable surface.

In an equivalent embodiment, shown in Figure 3, the nest level 103d coincides with the upper level 103a.

In this case, the intermediate level 103b and the lower level 103c comprise mainly halt areas 113.

According to this embodiment there are two belts 110, positioned in the lower portion of the nest level 103d, each one extending parallel to the other, substantially for the entire extension of its overlying access areas 107.

Conveniently each one of such belts 110 is interposed between the access areas 107 of the upper level 103a and the intermediate level 103b.

Such belts 110 prevent the feces and dirt from falling onto the halt areas of the intermediate level 103b.

In this manner the access areas 107 can be considered usable surface.

In other words, whatever the dimensions of the system and whatever the arrangement of the nests 4, 104, each droppings belt 10, 110 extends uninterrupted from one front end of the system to the one opposite it, in order to collect the dirt and feces and convey them outside the system.

In the same way, if the nest level is made up of a plurality of nests 4, 104, arranged side by side at least along the direction of motion of the egg collection belt 9a, 109a, each droppings belt 10, 110 extends uninterrupted under all the nests 4, 104, in order to collect the feces and dirt and convey them outside the system.

In the embodiments described previously, both the first rollers, for moving the egg collection belt 9a, 109a, and the second rollers, for moving the droppings belt 10, 110, are generally arranged at the ends of the nest level 3d, 103d.

It is also possible for there to be additional first rollers and additional second rollers in intermediate positions along the extension of the nest level 3d, 103d.

Each of the first rollers and each of the second rollers can have both an active movement function and a passive guiding and supporting function.

With particular reference to Figures 1 and 2, the system 1 comprises movement means 5 for moving the bottom 6 with respect to the system 1, in order to evacuate the animals A from the nest 4 once their egg-laying period is ended.

More specifically, the bottom 6 is hinged to the external wall 8 at a second portion 6b thereof, which is proximal with respect to the external wall 8.

In more detail, the bottom 6 can rotate with respect to the system 1 about an axis of rotation C which is proximate to the external wall 8 and to the access area 7 that is contiguous thereto.

Conveniently, the movement means 5 enable the rotation D of the bottom 6 about the axis of rotation C.

Such movement means 5 can have various embodiments, such as for example a rack and pinion mechanism, not shown in the figures, or a mechanism comprising a pulley 11 and a tension member 12, as shown in Figure 2.

Optionally, the system 1, 101 can comprise at least two nests 4, 104 which are on opposite sides of the egg collection belt 9a, 109a.

In this manner the system is optimized, by doubling the number of nests 4, 104 that lead to a single egg collection belt 9a, 109a.

With particular reference to the embodiments shown in Figures 1 and 3, there are at least two nests 4, 104, mutually opposite so as to define two parallel rows, and there is a single egg collection belt 9a, 109a.

Moreover, in the embodiment shown in Figures 1 and 2, the nest 4 can be at least partially superimposed on the egg collection belt 9a of the collection device 9.

In this manner the usable surface is increased, since the space recovered by moving the nests 4 can be used for example to enlarge the access areas 7 or to reduce the plan dimensions of each system 1 for the same size of the access areas 7.

Furthermore, in an embodiment (not shown) of the system, there can be two sliding belts each one of which is positioned substantially below a row of nests, in such a manner as to be better protected from fouling.

The operation of the system according to the invention is clear and evident from the foregoing description.

From the foregoing it is clear that the objective of providing a poultry farming system is reached and achieved, differently from the prior art.

In practice it has been found that the invention fully achieves the intended aim and objects by providing a poultry farming system that, by virtue of at least one droppings belt positioned below the halt areas of the level that contains at least one nest, also called a "nest level", increases the usable surface for the purposes of calculating the number of animals that can be farmed in the system.

An advantage of the invention consists in that the positioning of such droppings belt makes it possible to increase the usable surface for the purpose of calculating the number of animals that can be kept in the nest level, by recovering a not inconsiderable part of the surface of such level, which previously was not considered usable for the purpose of calculating the number of animals that can be farmed in the system overall.

Another advantage of the invention consists in that the presence of the droppings belt reduces the risks due to fouling of the underlying levels, with the corresponding improvement in the welfare of the animals and the reduction of the risk of diseases.

Another advantage of the invention consists of the increased ease of cleaning the system.

The invention, thus conceived, is susceptible of numerous modifications and variations, all of which are within the scope of the appended claims. Moreover, all the details may be substituted by other, technically equivalent elements.

In practice, the materials used, as well as the contingent shapes and dimensions, may be any according to the requirements and to the state of the art.

The disclosures in Italian Patent Application No. 102025000007224 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A poultry farming system (1, 101), particularly for egg-laying hen farms, comprising:
- a supporting frame (2, 102) defining a lower level (3c, 103c), positioned proximate to the ground, an intermediate level (3b, 103b), contiguous with and substantially superimposed on said lower level (3c, 103c), and an upper level (3a, 103a), contiguous with and substantially superimposed on said intermediate level (3b, 103b);
- at least one nest (4, 104), accommodated in a nest level (3d, 103d) chosen from between said upper level (3a, 103a) and said intermediate level (3b, 103b);
- at least one access area (7, 107), at least partially arranged in said nest level (3d, 103d) and extending from an external wall (8, 108) of said at least one nest (4, 104) in the opposite direction with respect to said at least one nest (4, 104);
- at least one collection device (9, 109), comprising an egg collection belt (9a, 109a); said egg collection belt (9a, 109a) being integrally associated with said nest level (3d, 103d) proximate to a first portion (6a, 106a) of the bottom (6, 106) of said at least one nest (4, 104), which is distal with respect to said external wall (8, 108);
said system (1, 101) being **characterized in that** it comprises at least one droppings belt (10, 110) located in a lower portion of said nest level (3d, 103d); said at least one droppings belt (10, 110) being at least interposed between said at least one access area (7, 107) present in said nest level (3d, 103d) and the level immediately below the nest level.

2. The system (1, 101) according to claim 1, **characterized in that** said at least one droppings belt (10, 110) has an extension in plan view that substantially coincides with the extension in plan view of the surfaces of said at least one access area (7, 107) comprised within said nest level (3d, 103d).

3. The system (1) according to claim 1 or 2, **characterized in that** said at least one droppings belt (10) extends substantially for the entire extension of said nest level (3d).

4. The system (1, 101) according to one or more of the preceding claims, **characterized in that** said at least one droppings belt (10, 110) is made of polymeric material.

5. The system (1, 101) according to one or more of the preceding claims, **characterized in that** said at least one droppings belt (10, 110) can slide along said nest level (3d, 103d).

6. The system (1) according to one or more of the preceding claims, **characterized in that** it comprises movement means (5) for moving said bottom (6) with respect to said system (1).

7. The system (1) according to one or more of the preceding claims, **characterized in that** said bottom (6) is hinged to said external wall (8) at a second portion (6b) thereof, which is proximal with respect to said external wall (8).

8. The system (1) according to one or more of the preceding claims, **characterized in that** said bottom (6) can rotate with respect to said system (1) about an axis of rotation (C) which is proximate to said external wall (8) and to said access area (7) that is contiguous thereto.

9. The system (1, 101) according to one or more of the preceding claims, **characterized in that** it comprises at least two nests (4, 104) which are mutually opposite at said egg collection belt (9a, 109a) of said at least one collection device (9, 109).

10. The system (1) according to one or more of the preceding claims, **characterized in that** said at least one nest (4) is at least partially superimposed on said egg collection belt (9a) of said at least one collection device (9).
